# EUROPEAN PATENT APPLICATION

(11) **EP 1 746 270 A1**
(43) Date of publication of application: **24.01.2007**
(21) Application number: 05730432.1
(22) Date of filing: 13.04.2005
(51) Int. Cl.: F02C 7/00, F01D 9/02, F01D 25/00, F02C 9/00, G01K 1/14, G01K 13/02, G01L 23/26

(54) **TURBINE NOZZLE SEGMENT, TURBINE NOZZLE, TURBINE, AND GAS TURBINE ENGINE**

(30) Priority: 26.04.2004 JP 2004130210
(71) Applicant: Ishikawajima-Harima Heavy Industries Co., Ltd., Tokyo 135-8710 (JP)
(72) Inventor: TSURU, A., Ishikawajima-Harima Heavy Ind. Co. Ltd., Koto-ku, Tokyo 1358710 (JP); NISHIMURA, K,Ishikawajima-Harima Heavy Ind. Co Ltd, Koto-ku, Tokyo 1358710 (JP); AOTSUKA,M.,Ishikawajima-Harima Heavy Ind. Co. Ltd., Koto-ku, Tokyo 1358710 (JP); TANIMITSU,H.,Ishikawajima-Harima Heavy Ind. Co Ltd, Koto-ku, Tokyo 1358710 (JP)
(74) Representative: Godwin, Edgar James
(86) International application number: PCT/JP2005/007147
(87) International publication number: WO 2005/103465

(57) **Abstract**

A turbine nozzle segment, a turbine nozzle, a turbine, and a gas turbine engine. The turbine nozzle segment is provided with an outer band 39 of an arc shape, an inner band 41 of an arc shape, a thick stator vane 43 in which an insertion hole 49 to which a probe 47 is insertable from a side of the outer band 39 is formed and on the pressure surface 43b of which an inlet hole 51 communicating with the insertion hole 49 is formed, and a thin stator vane 45 having a suction surface 45a having an identical shape to a suction surface 43a of the thick stator vane 43 and a smooth pressure surface 45b approximating to a pressure surface 43b of the thick stator vane 43 configured to be thinner than the thick stator vane.

## Description

### TECHNICAL FIELD

The present invention relates to a turbine nozzle segment, a turbine nozzle, a turbine, and a gas turbine engine.

### BACKGROUND ART

It is generally carried out to measure temperature and pressure of a hot gas at the vicinity of an inlet of a low pressure turbine and control a fuel flow rate and such based on the measured data in a case of gas turbine engine such as a jet engine. There may be a case to apply a configuration to the gas turbine engine to measure the temperature and the pressure of the hot gas at the vicinity of the inlet of the low pressure turbine as for an example.

More specifically, rakes are arranged extending in radial directions of the gas turbine engine at the vicinity of the inlet of the low pressure turbine in a gas flow path of the gas turbine engine. Moreover, in each of the rakes, an insertion hole is formed so that a probe for measuring the temperature or the pressure of the hot gas can be inserted therethrough, and an inlet hole communicating the insertion hole is formed at a side face of the rake. The probe is linked with a controller for controlling the fuel flow rate and such via an amplifier.

Therefore, in the course of operating the gas turbine engine, the temperature or the pressure of the hot gas flowing into the inlet hole is measured by means of the probe inserted into the insertion hole. Then, the controller controls the fuel flow rate and such based on the measured data inputted from the probe via the amplifier.

### DISCLOSURE OF INVENTION

By the way, if the rakes extending in the radial directions are arranged at the vicinity of the inlet of the low pressure turbine in the gas flow path, the axial length of the gas turbine engine is elongated, and it brings about weight increase of the gas turbine engine. In addition, the rakes in the gas flow path come to be vibration excitation source and air resistance, thereby it gives rise to a problem of decline in the engine performance of the gas turbine engine.

On the other hand, it could be considered to shape a stator vane of a low pressure turbine nozzle applied to the low pressure turbine into a hollow structure by casting and insert the probe into the interior of the stator vane, however, the low pressure turbine nozzle is segmented into a plurality of turbine nozzle segments and it is technically difficult to shape the stator vane as a part of the turbine nozzle segments into a hollow structure by casting, and there is a problem that a production cost of the turbine nozzle segments, in other words, a production cost of the turbine nozzle, becomes very high.

Therefore, to solve the aforementioned problem, a first feature of the present invention is, a turbine nozzle applied to a turbine of a gas turbine engine, the turbine nozzle comprising a plurality of turbine nozzle segments arranged in a circle: each of the turbine nozzle segments comprising; an outer band of an arc shape, an inner band of an arc shape provided to opposed to the outer band, a thick stator vane integrally formed to link between the outer band and the inner band, and a thin stator vane integrally formed to link between the outer band and the inner band, the thin stator vane having a suction surface having an identical shape to a suction surface of the thick stator vane and a smooth pressure surface approximating to a pressure surface of the thick stator vane, the thin stator vane being configured to be thinner than the thick stator vane so that the pressure surface comes near to the suction surfaces, in that; an insertion hole to which a probe for measuring a temperature or a pressure of a hot gas is insertable from a side of the outer band is formed in the thick stator vane of any turbine nozzle segment of the plurality of turbine nozzle segments, and an inlet hole communicating with the insertion hole is formed on the pressure surface of the thick stator vane of said any turbine nozzle segment.

Further, a feature of the present invention is a turbine nozzle segment as a segment of a turbine nozzle applied to a turbine of a gas turbine engine, the turbine nozzle segment characterized by comprising: an outer band of an arc shape; an inner band of an arc shape provided to opposed to the outer band, a thick stator vane integrally formed to link between the outer band and the inner band, wherein an insertion hole to which a probe for measuring a temperature or a pressure of a hot gas is insertable from a side of the outer band is formed in the thick stator vane, and an inlet hole communicating with the insertion hole is formed on the pressure surface; and a thin stator vane integrally formed to link between the outer band and the inner band, the thin stator vane having a suction surface having an Identical shape to a suction, surface of the thick stator vane and a smooth pressure surface approximating to a pressure surface of the thick stator vane, the thin stator vane being configured to be thinner than the thick stator vane so that the pressure surface comes near to the suction surfaces.

### BRIEF DESCRIPTION OF DRAWINGS

[FIG. 1] Fig. 1 is a schematic drawing of a gas turbine engine in accordance with an embodiment of the present invention.
[FIG. 2] Fig. 2 is a partial cross sectional view of a low pressure turbine in a jet engine in accordance with the embodiment of the present invention.
[FIG. 3] Fig. 3 is a partial front view of a turbine nozzle at a first stage in accordance with the embodiment of the present invention.
[FIG. 4] Fig. 4 is a front view of a turbine nozzle segment in accordance with the embodiment of the present invention.
[PIG. 5] Fig. 5 is a drawing taken along a V-V line in Fig. 3.

### BEST MODE FOR CARRYING OUT THE INVENTION

To explain the present invention in more detail, an embodiment will be described herein after with proper reference to the drawings. Meanwhile, in these drawings, "FF" indicates a forward direction, "FR" indicates a rearward direction, and "S" indicates spanwise directions.

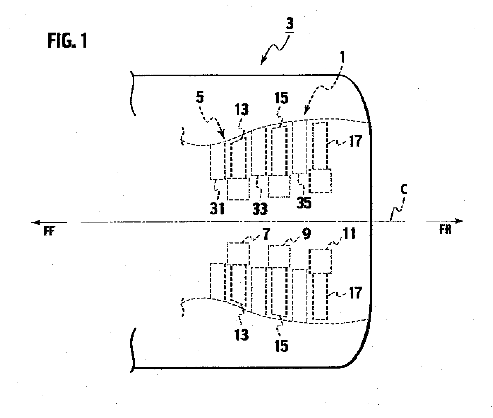

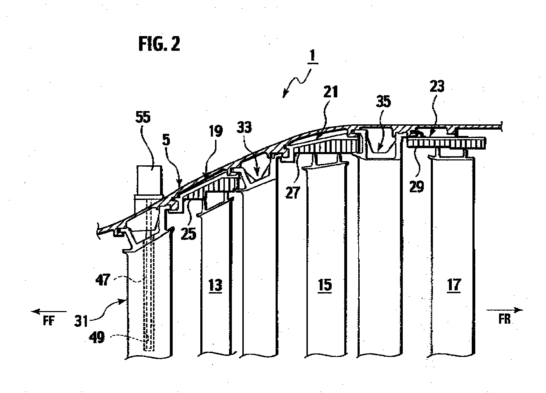

As shown in Fig. 1 and Fig. 2, a low pressure turbine 1 in accordance with the embodiment of the present invention is applied to a jet engine 3 as an example of a gas turbine engine, and is provided with a low pressure turbine case 5.

In the low pressure turbine case 5, a plurality of stages of turbine disks 7, 9, 11 are arranged to leave intervals in its fore and aft directions, and the plurality of stages of the turbine disks 7, 9, 11 are integrally linked with each other and rotatable around an engine axial center C. Further, at outer peripheral portions of the respective stages of the turbine disks 7, 9, 11, a plurality of turbine blade 13, 15, 17 are respectively provided. Here, the plurality of turbine disks 7, 9, 11 are integrally linked with rotors of a not-shown low pressure compressor and rotors of not-shown fans.

In the low pressure turbine case 5, a plurality of stages of turbine shrouds 19, 21, 23 for suppressing overheat of the low pressure turbine case 5 are arranged so as to respectively enclose the turbine blades 13, 15, 17 of correspondent stages. Further, the respective stages of the turbine shrouds 19, 21, 23 are respectively provided with honeycomb members 25, 27, 29 capable of allowing tip portions of the turbine blades 13, 15, 17 of correspondent stages. Here, the respective stages of turbine shrouds 19, 21, 23 are respectively segmented.

In the low pressure turbine case 5, a plurality of stages of turbine nozzles 31, 33, 35 are arranged so as to alternate with the plurality of stages of the turbine disks 7, 9, 11 to leave intervals in the fore and aft directions. Here, the respective stages of the turbine nozzles 31, 33, 35 are respectively segmented.

Therefore, as the plurality of stages of the turbine disks 7, 9, 11 integrally rotate by expansion of high-temperature gas from a not-shown combustor, the low pressure turbine 1 obtains driving force and makes the motors of the low pressure compressor and the rotors of the fans integrally rotate to drive the compressor and the fans.

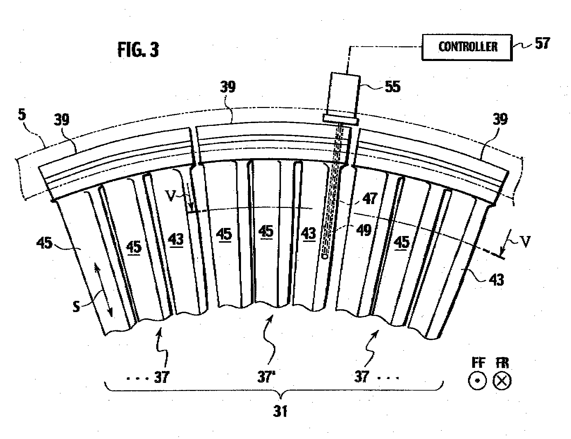

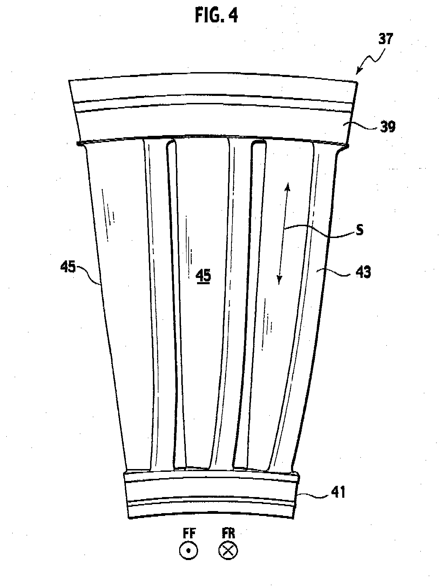

As shown in Fig. 3 and Fig. 4, the turbine nozzle 31 of the first stage is applied to a low pressure turbine 1 as mentioned above, and is composed of plurality of turbine nozzle segments 37 arranged in a circle. Configurations of the respective turbine nozzle segments 37 are as follows:

Specifically, the turbine nozzle segment 37 is provided with an outer band 39 of an arc shape, an inner band 41 of an are shape provided opposed to the outer band 39. Between the outer band 39 and the inner band 41, a thick stator vane 43 is integrally formed to link therebetween, and the thick stator vane 4 3 is disposed at one ends of the bands 39, 41. Further, between the outer band 39 and the inner band 41, two thin stator vanes 45 are integrally formed to link therewith.

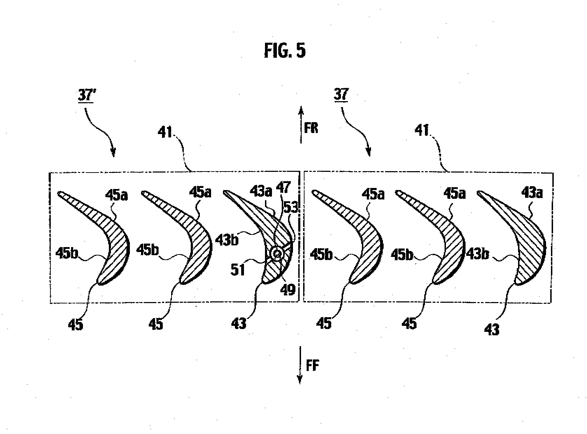

Here, as shown in Fig. 5, each of the thin stator vanes 45 have a suction surface 45a having the same shape as a suction surface 43a of the thick stator vane 43, and a pressure surface 45b having a smooth shape approximating to a shape of a pressure surface 43b of the thick stator vane 43. The thin stator vanes 45 are configured to be thinner than the thick stator vane 43 so that the pressure surfaces 45b come near to the suction surfaces 45a.

Further, to any turbine nozzle segment 37' among the plurality of turbine nozzle segments 37, the following configurations are further added.

More specifically, as shown in Fig. 5, Fig. 2, and Fig. 3, in the thick stator vane 43, an insertion hole 49 to which a probe 47 for measuring temperature of the hot gas is insertable from the side of the outer band 39 is formed by electric spark machining or such, the insertion hole 49 is disposed at a maximum thickness portion of the thick stator vane 43, and a tip end portion of the insertion hole 49 extends to the vicinity of the central portion in the spanwise directions S in the thick stator vane 43. Further, at the vicinity of the central portion in the spanwise directions 3 in the pressure surface 43b of the thick stator vane 43, the inlet hole 51 communicating with the insertion hole 49 is formed. And, at the vicinity of the central portion in the spanwise directions S in the suction surface 43a of the thick stator vane 43, an outlet hole 53 communicating with the insertion hole 49 is formed. Here, the inlet hole 51 and the outlet hole 53 are disposed on an identical line but are not necessarily disposed on the identical line.

Meanwhile, the probe 47 is electrically connected with a controller 57 via an amplifier 55 fixed on the low pressure turbine case 5.

Next, operations of the embodiment of the present invention will be described hereinafter.

Because the insertion hole 49 to which the probe 47 is insertable from the side of the outer band 39 into the thick stator vane 43 is formed in the turbine nozzle segment 37' and the inlet hole 51 communicating with the insertion hole 49 is formed on the pressure surface 43b of the thick stator vane 43 in the turbine nozzle segment 37', the temperature of the hot gas flowing into the inlet hole 51 can be measured by the probe 47 during operation of the jet engine without arranging rakes extending in the radial direction of the jet engine in the gas flow path of the jet engine or forming the stator vanes 43, 45 of the turbine nozzle segment 37' a hollow structure to be a hollow structure by casting. Meanwhile, the controller 57 controls the fuel flow rate and such based on the measured data.

Further, because the outlet hole 53 communicating with the insertion hole 49 is formed on the suction surface 43a of the thick stator vane 43 in the turbine nozzle segment 37', the inlet hole 51 and the outlet hole 53 communicates with each other via the insertion hole 49 and hence fluidity of the hot gas flowing in the inlet hole 51 can be assured.

Further, because the thin stator vane 45 in each of the turbine nozzle segments 37 is configured to be thinner than the thick stator vane 43 so that the pressure surface 45b comes closer to the suction surface 45a, reduction in weight of the turbine nozzle segment 37, in other words, reduction in weight of the turbine nozzle 31, can be achieved.

Moreover, because each thin stator vane 45 of the respective turbine nozzle segments 37 has the suction surface 45a having the same shape as the suction surface 43a of the thick stator vane 43, even if each thick stator vane 43 and each thin stator vane 45 of the respective turbine nozzle segments 37 are not the same in shape, decline in aerodynamic performance can be prevented. Further, because each stator vane 45 of the respective turbine nozzle segments 37 has the pressure surface 45b having the smooth shape approximating to the shape of the pressure surface 43b of the thick stator vane 43, each thick stator vane 43 and each thin stator vane 45 of the respective turbine nozzle segments 37 are not the same in shape, total pressure loss of the plurality of stator vanes 43, 45 can be moderated.

In accordance with the best mode as mentioned above, because it is possible to measure temperature of the hot gas flowing into the inlet hole 51 by means of the probe 47 inserted into the insertion hole 49 during operation of the jet engine without arranging rakes extending in radial directions in the gas flow path of the jet engine, or shaping stator vanes 43, 45 of the turbine nozzle segment 37' into hollow structures by casting, with reducing production cost of the turbine nozzle 31, reduction in weight of the jet engine can be achieved by avoiding elongation of the gas turbine engine in the axial direction, as well as engine performance of the gas turbine engine can be improved by decreasing number of parts which cause vibration excitation source and air resistance in the gas flow path.

Moreover, because the inlet hole 51 and the outlet hole 53 communicate with each other via the Insertion hole 49 and fluidity of the hot gas flowing into the inlet hole 51 can be assured, fluctuation of the measured temperature of the hot gas is suppressed so as to assure highly accurate measurement of the hot gas by means of the probe 47.

Further, even if each thick stator vane 43 and each thin stator vane 45 of the respective nozzle segments 37 are not identical in shape, because total pressure loss of the stator vanes 43, 45 is moderated and reduction in weight of the turbine nozzle 31 is achieved, weight reduction of the jet engine can be promoted.

Although the present invention has been described above by reference to certain preferred embodiments, the scope of the right included in the invention is not limited to these embodiments. Modifications of the embodiments, in which for example, instead of the insertion hole 49 to which the probe 47 for being applied to measuring temperature of hot gas is insertable being formed in the interior of the thick stator vane 43, an insertion hole to which another probe for measuring pressure of the hot gas is insertable, will occur or such to embody the invention.

The entire contents of the Patent Application No. 2004-130210 filed with the Japan Patent Office on April 26, 2004 are made to be incorporated into the contents of the present application by reference.

## Claims

1. A turbine nozzle applied to a turbine of a gas turbine engine, the turbine nozzle comprising a plurality of turbine nozzle segments arranged in a circle:
each of the turbine nozzle segments comprising;
an outer band of an arc shape,
an inner band of an are shape provided to opposed to the outer band,
a thick stator vane integrally formed to link between the outer band and the inner band, and
a thin stator vane integrally formed to link between the outer band and the inner band, the thin stator vane having a suction surface having an identical shape to a suction surface of the thick stator vane and a smooth pressure surface approximating to a pressure surface of the thick stator vane, the thin stator vane being configured to be thinner than the thick stator vane so that the pressure surface comes near to the suction surfaces,
the turbine nozzle **characterized in that**;
an insertion hole to which a probe for measuring a temperature or a pressure of a hot gas is insertable from a side of the outer band is formed in the thick stator vane of any turbine nozzle segment of the plurality of turbine nozzle segments, and an inlet hole communicating with the insertion hole is formed on the pressure surface of the thick stator vane of said any turbine nozzle segment.

2. The turbine nozzle as set forth in claim 1, **characterized in that** an outlet hole communicating with the insertion hole is formed on the suction surface of the thick stator vane of said any turbine nozzle segment.

3. A turbine nozzle segment as a segment of a turbine nozzle applied to a turbine of a gas turbine engine, the turbine nozzle segment **characterized by** comprising:
an outer band of an arc shape;
an inner band of an arc shape provided to opposed to the outer band,
a thick stator vane integrally formed to link between the outer band and the inner band, wherein an insertion hole to which a probe for measuring a temperature or a pressure of a hot gas is insertable from a side of the outer band is formed in the thick stator vane, and an inlet hole communicating with the insertion hole is formed on the pressure surface; and
a thin stator vane integrally formed to link between the outer band and the inner band, the thin stator vane having a suction surface having an identical shape to a suction surface of the thick stator vane and a smooth pressure surface approximating to a pressure surface of the thick stator vane, the thin stator vane being configured to be thinner than the thick stator vane so that the pressure surface comes near to the suction surfaces.

4. The turbine nozzle segment as set forth in claim 3, **characterized in that** an outlet hole communicating with the insertion hole is formed on the suction surface of the thick stator vane.

5. A turbine comprising the turbine nozzle segment as set forth in claim 1 or claim 2.

6. A gas turbine engine comprising the turbine as set forth in claim 5.
